# EUROPÄISCHE PATENTSCHRIFT

(11) **EP 2 942 491 B1**
(45) Veröffentlichungstag und Bekanntmachung des Hinweises auf die Patenterteilung: **07.11.2018**
(21) Anmeldenummer: 15165771.5
(22) Anmeldetag: 29.04.2015
(51) Int. Cl.: F01D 25/18, B01D 45/12, F02C 7/06, B01D 47/02, B01D 47/06

(54) **VORRICHTUNG EINES FLUGTRIEBWERKES ZUM ABSCHEIDEN VON ÖL AUS EINEM LUFT-ÖL-VOLUMENSTROM**
DEVICE OF AN AIRCRAFT ENGINE FOR SEPARATING OIL FROM AN OIL AIR FLOW
DISPOSITIF D'UN MOTEUR DESTINÉ À SÉPARER L'HUILE D'UN DÉBIT HUILE-AIR

(30) Priorität: 09.05.2014 DE 102014106583
(43) Veröffentlichungstag der Anmeldung: 11.11.2015
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Schmidt, Martin Michael

(56) Entgegenhaltungen:
- EP-A1- 0 836 005
- FR-A- 903 942
- US-A- 5 413 626
- US-A1- 2009 183 950
- US-B1- 6 391 100

## Beschreibung

Die Erfindung betrifft eine Vorrichtung für ein Flugtriebwerk zum Abscheiden von Öl aus einem Luft-Öl-Volumenstrom gemäß der im Oberbegriff des Patentanspruches 1 näher definierten Art.

Aus der nicht veröffentlichten DE 10 2013 112 771.1 der Anmelderin ist ein Strahltriebwerk mit einer Einrichtung zum Einsprühen von Öl in einen in einem von einem Wandungsbereich begrenzten Strömungsquerschnitt geführten Luft-Öl-Volumenstrom bekannt, der zum Abscheiden von Öl durch einen Ölabscheider führbar ist. Das Öl ist im Bereich der Einrichtung über einen fest mit dem Wandungsbereich verbundenen Auslassbereich in den Luft-Öl-Volumenstrom einsprühbar, womit auch bestehende Strahltriebwerkssysteme mit geringem Aufwand mit einer Einrichtung zum Einsprühen von Öl ausführbar sind.

Aus der UA 2009/0183950 A1 ist ein Ölsystem mit einem Wirbelstromseparator beschrieben, wobei der Wirbelstromseparator eine zylindrische Kammer aufweist. Über einen Einlass ist der zylindrischen Kammer des Wirbelstromseparators Öl zuführbar.

Aufgabe der vorliegenden Erfindung ist es, eine Abscheideleistung einer solchen Vorrichtung weiter zu verbessern.

Erfindungsgemäß wird diese Aufgabe mit einer Vorrichtung mit den Merkmalen des Patentanspruches 1 gelöst.

Die erfindungsgemäße Vorrichtung für ein Flugtriebwerk zum Abscheiden von Öl aus einem Luft-Öl-Volumenstrom ist mit einer Einrichtung zum Einleiten von Öl in den Luft-Öl-Volumenstrom ausgebildet. Ein Auslassbereich der Einrichtung zum Einleiten von Öl ist in einem geschlossenen Leitungsbereich vorgesehen, in den der Luft-Öl-Volumenstrom über einen Einlassbereich einleitbar ist.

Erfindungsgemäß verjüngt sich ein Strömungsquerschnitt des Leitungsbereiches stromab des Auslassbereiches der Einrichtung in einem Konfusorbereich zumindest abschnittsweise wenigstens teilweise düsenartig, wobei der Leitungsbereich stromauf des Auslassbereiches der Einrichtung einen Diffusorbereich aufweist, in dessen Bereich der Strömungsquerschnitt des Leitungsbereiches zumindest abschnittsweise wenigstens annähernd diffusorartig erweiternd ausgebildet ist.

Da der über den Auslassbereich der Einrichtung mit Öl beaufschlagte Luft-Öl-Volumenstrom im Konfusorbereich beschleunigt wird, vereinigen sich auch Tröpfchen des Luft-Öl-Volumenstroms mit einer Tröpfchengröße vorzugsweise < 1 µm mit dem eingeleiteten Öl zu größeren Tröpfchen. Die größeren Öltröpfchen scheiden sich bereits an einem den Konfusorbereich begrenzenden Wandungsbereich ab, womit ein Ölgehalt des Luft-Öl-Volumenstromes in gewünschtem Umfang herabsetzbar ist.

Vorliegend wird unter dem Begriff Konfusorbereich das Gegenstück eines Diffusorbereichs verstanden. In einem Konfusorbereich verjüngt sich der Strömungsquerschnitt eines Leitungsbereiches zumindest abschnittsweise, wodurch sich die Strömungsgeschwindigkeit des den Konfusorbereich durchströmenden Fluids erhöht, das flüssig oder gasförmig sein kann. Im Gegensatz hierzu erweitert sich der Strömungsquerschnitt im Diffusorbereich und das durchströmende Fluid wird abgebremst. Grundsätzlich weist ein Konfusorbereich eine stetige Querschnittsverengung mit konstantem Einschnürungswinkel auf. Prinzipiell können Konfusorbereiche auch Querschnittsverengungen mit veränderlichem Einschnürungswinkel haben. Bei Konfusorbereichen ist die Strahlablösung wesentlich kleiner als bei plötzlichen Querschnittsverengungen, weshalb auch Widerstandszahlen von Konfusorbereichen deutlich kleiner sind. Generell sind unter dem Begriff Konfusor oder Konfusorbereich konisch ausgeführte Zuläufe oder auch Düsen eines Leitungsbereiches subsumierbar, in deren Bereich der Strömungsquerschnitt eines Leitungsbereiches in Strömungsrichtung eines Fluides abnimmt und gleichzeitig die Geschwindigkeit des den Konfusorbereich durchströmenden Fluids zunimmt.

Mittels der Kombination aus der Einrichtung zum Einleiten von Öl in den Luft-Öl-Volumenstrom und der Gestaltung des Strömungsquerschnittes ist die Beladung eines in Richtung einer Umgebung abströmenden Luft-Öl-Volumenstromes mit Öl in gewünschtem Umfang reduzierbar. Die Einrichtung ist hierfür derart konfiguriert, dass durch das Einleiten von Öl in den Luft-Öl-Volumenstrom in diesem Öltropfen entstehen, die größtenteils größer sind als Öltropfen, die aufgrund ihrer geringen Größe nicht oder nur mit hohem Aufwand abscheidbar sind.

Dadurch, dass der Leitungsbereich stromauf des Auslassbereiches der Einrichtung einen Diffusorbereich aufweist, in dessen Bereich der Strömungsquerschnitt des Leitungsbereiches zumindest abschnittsweise wenigstens annähernd diffusorartig erweiternd ausgebildet ist, bildet sich im Zwischenbereich des geschlossenen Leitungsbereiches eine wenigstens annähernd laminare Strömung aus, die nur geringe Druckverluste im Leitungsbereich erzeugt und ein Koaleszieren kleiner Öltropfen mit dem eingeleiteten Öl begünstigt bzw. verbessert.

Das gewünschte Einstellen möglichst großer Tropfendurchmesser im Luft-Öl-Volumenstrom durch das Einleiten von Öl im Leitungsbereich wird bei einer vorteilhaften Ausführungsform der erfindungsgemäßen Vorrichtung dadurch begünstigt, dass ein Strömungsquerschnitt eines Zwischenbereiches des geschlossenen Leitungsbereiches, der sich zumindest zwischen dem Auslassbereich der Einrichtung und dem Konfusorbereich erstreckt, zur Verhinderung einer positiven Beschleunigung der Luft-Öl-Volumenstromes im Einleitbereich wenigstens annähernd konstant und/oder sich zumindest abschnittsweise wenigstens annähernd diffusorartig erweiternd ausgebildet ist. Diese konstruktive Gestaltung des Zwischenbereiches des geschlossenen Leitungsbereiches bewirkt eine das Koaleszieren kleiner Tröpfchen des Luft-ÖI-Volumenstromes mit dem eingeleiteten Öl zu größeren Tröpfchen begünstigende Strömungsberuhigung, was eine Abscheideleistung von Öl aus einem Luft-Öl-Volumenstrom mit geringem Aufwand verbessert.

Schließt sich an den Konfusorbereich ein Umlenkbereich des Leitungsbereiches an, der eine Biegung vorzugsweise um 90° aufweist und der mit einem separaten Ölauslass oder mit einem kombinierten Luft-Öl-Auslass des Leitungsbereiches ausgeführt ist, wird das im Luft-Öl-Volumenstrom mitgeführte Öl aufgrund seiner höheren Trägheit im Bereich der Biegung auf konstruktiv einfache Art und Weise im gewünschten Umfang abgeschieden und ein Ölgehalt des Luft-ÖI-Volumenstromes reduziert.

Bei einer weiteren vorteilhaften Ausführungsform der erfindungsgemäßen Vorrichtung ist der Leitungsbereich mit einem Zyklon verbunden, in dessen Bereich Öl aus einem Luft-Öl-Volumenstrom, der in den Leitungsbereich einzuleiten ist oder aus diesem ausgeführt wird, mechanisch abschaltbar. Im Bereich des Zyklons bzw. des Fliehkraftabscheiders wird die Luft als Träger des Öls durch ihre eigene Strömungsgeschwindigkeit und entsprechende konstruktive Gestaltung des Zyklons in eine Drehbewegung versetzt. Die auf die Öltröpfchen wirkenden Zentrifugalkräfte beschleunigen die Öltröpfchen im Zyklon radial nach außen, die sich beim Auftreffen an einer Begrenzungswand bzw. einer Gehäusewand des Zyklons abscheiden. Die Öltröpfchen werden dadurch vom Luftstrom getrennt, der nach innen geleitet und abgeführt wird.

Ist stromab des Leitungsbereiches ein Ölabscheider bzw. Breather vorgesehen, ist die Beladung des Luft-Öl-Volumenstromes mit Öl weiter reduzierbar. Dabei wird vorliegend unter einem Ölabscheider bzw. einem Breather ein Zentrifugalölabscheider verstanden, der einen als Zentrifuge wirkenden Umlenkbereich aufweist. Im Bereich eines solchen Breathers werden Ölpartikel mit kleineren Durchmessern durch einen im Ölabscheider angeordneten Metallschirm aufgefangen und aus der Luft gefiltert. Das durch dieses Filtern abgeschiedene Öl wird einem Ölkreislauf wieder zugeführt. Die gereinigte Luft wird vorzugsweise an die Umwelt eines Flugtriebwerkes abgegeben.

In Abhängigkeit des jeweils vorliegenden Anwendungsfalles ist ein Einlass des Zyklons für den Luft-Öl-Volumenstrom mit einem Luft-Auslass des Leitungsbereiches oder mit einem Luft-Auslass des mit Öl beaufschlagten Bereiches eines Triebwerkes verbunden, wobei ein Luft-Auslass des Zyklons mit dem Einlassbereich des Leitungsbereiches, dem Luft-Einlass eines Breathers oder mit einer Umgebung des Triebwerkes verbindbar ist.

Weist der Zyklon einen separaten Luft- und Öl-Auslass auf, wobei der Öl-Auslass des Zyklons in Einbaulage des Zyklons in einem unteren Bereich des Zyklons vorgesehen ist, während Luft über den Luft-Auslass aus einem mittigen Bereich eines Innenraumes des Zyklons aus diesem ableitbar ist, ist eine Ölbeladung eines Luft-Öl-Volumenstromes im Bereich eines Zyklons mit geringem Aufwand reduzierbar.

Ein Luft-Öl-Volumenstrom ist über den Luft-Einlass tangential zu einem Wandungsbereich des Zyklons in den Zyklon einleitbar, um im Luft-ÖI-Volumenstrom mitgeführte Öltropfen mit hoher Abscheideleistung aus dem Luft-ÖI-Volumenstrom abscheiden zu können.

Der Zyklon besteht vorzugsweise im Wesentlichen aus einem Einlaufzylinder, einem Kegel, einem Ölauffangbehälter und einem Tauchrohr, welches beispielsweise mittig und in Einbaulage des Zyklons von oben herab im Einlaufzylinder angebracht ist. Im Einlaufzylinder wird das Luft-Öl-Volumengemisch durch tangentiales Einblasen des Luft-Öl-Volumenstromes auf eine kreisförmige Bahn gebracht. Durch die Verjüngung des sich an den Einlaufzylinder anschließenden Kegels nimmt die Drehgeschwindigkeit des Luft-Öl-Volumenstromes dermaßen zu, dass die Öltröpfchen durch die Fliehkraft an die Kegelwände geschleudert und somit abgebremst werden. Die Öltröpfchen lösen sich aus der Strömung und fließen nach unten in den Auffangbehälter ab. Die gereinigte Luft wird aus dem Kegel durch das mittige Tauchrohr nach oben oder seitlich aus dem Zyklon ausgeleitet.

Bei einer weiteren vorteilhaften Ausführung der erfindungsgemäßen Vorrichtung ist im Inneren des Zyklons ein Auslassbereich für Öl vorgesehen, wobei Öl tangential zum Wandungsbereich des Zyklons und im Wesentlichen senkrecht zu einer Hochachse des Zyklons in einem wandungsnahen Bereich in einen Innenraum des Zyklons eingeleitet wird, um im Bereich des inneren Wandungsbereiches einen eine Abscheideleistung des Zyklons verbessernden Ölfilm und eine in Richtung des Auslassbereiches für Öl des Zyklons weisende Ölströmung im Ölfilm zu erzeugen, die wiederum eine Abscheideleistung des Zyklons verbessert.

Ist das Öl über den Auslassbereich der Einrichtung wenigstens annähernd mittig in den Leitungsbereich einleitbar, wird der Luft-Öl-Volumenstrom möglichst gleichmäßig über den gesamten Strömungsquerschnitt des Luft-ÖI-Volumenstromes mit Öl beaufschlagt.

Wenn das Öl über den Auslassbereich der Einrichtung in Form eines Sprühkegels oder als kegelförmiger Ölfilm in den Leitungsbereich eingeleitet wird, wird eine gewünscht gleichmäßige Beaufschlagung des Luft-Öl-Volumenstromes mit Öl erreicht.

Der Öffnungswinkel des Sprühkegels oder des kegelförmigen Ölfilms ist bei einer weiteren Ausführungsform der erfindungsgemäßen Vorrichtung über den Auslassbereich der Einrichtung so einstellbar, dass das kegelförmig eingeleitete Öl in einem dem Auslassbereich der Einrichtung zugewandten Wandbereich des Konfusorbereiches auftrifft, womit im Konfusorbereich wiederum ein Ölfilm und eine Ölfilmströmung in Richtung eines Öl-Auslasses des Leitungsbereiches erzeugt wird, um eine Abscheideleistung der Vorrichtung mit geringem Aufwand zu verbessern.

Ist der Luft-Öl-Volumenstrom über einen Einleitbereich stromauf des Auslassbereiches der Einrichtung in den Leitungsbereich einleitbar, dessen Strömungsquerschnitt kleiner ist als der Strömungsquerschnitt des Leitungsbereiches stromauf des Auslassbereiches der Einrichtung, wird die Strömungsgeschwindigkeit des Luft-Öl-Volumenstromes im Leitungsbereich stromauf des Auslassbereiches der Einrichtung reduziert und ein Koaleszieren von Öltröpfchen im Luft-ÖI-Volumenstrom mit über den Auslassbereich der Einrichtung in den Leitungsbereich eingeleitetem Öl zu Öltröpfchen mit größeren Durchmessern begünstigt und eine Abscheideleistung der Vorrichtung mit geringem Aufwand verbessert.

Wenn der Luft-Öl-Volumenstrom über den Einleitbereich tangential zum Wandungsbereich des Leitungsbereiches und im Wesentlichen senkrecht zur Einleitrichtung des Öls in den Leitungsbereich eingeleitet wird, werden vom Luft-ÖI-Volumenstrom mitgeführte Öltröpfchen aufgrund von Zentrifugalkräften bereits stromauf des Auslassbereiches der Einrichtung am Wandungsbereich des Leitungsbereiches abgeschieden. Die aufgrund ihrer Durchmesser noch nicht abgeschiedenen Öltröpfchen werden stromab des Auslassbereiches der Einrichtung mit dem eingeleiteten Öl beaufschlagt und vereinigen sich mit dem eingeleiteten Öl zu größeren Öltröpfchen, die nachfolgend mit geringem Aufwand aus dem Luft-ÖI-Volumenstrom abscheidbar sind, wodurch wiederum eine verbesserte Abscheideleistung erzielt wird.

Ist eine weitere Öleinleitung in einem wandnahen Bereich des Leitungsbereiches und vorzugsweise stromauf des Auslassbereiches der Einrichtung vorgesehen, um im Wandbereich des Leitungsbereiches einen Ölfilm und eine Strömung im Ölfilm in Richtung des Ölauslasses des Leitungsbereiches zu erzeugen, wird die Abscheideleistung der Vorrichtung wiederum mit geringem Aufwand verbessert.

Der Zyklon kann je nach Beladung des Luft-Öl-Volumenstromes mit Öl und auch in Abhängigkeit der konstruktiven Gestaltung des Leitungsbereiches und der Einrichtung zum Einleiten von Öl stromab oder stromauf des Leitungsbereiches angeordnet sein, wobei ein optional in dem Strömungsweg des Luft-Öl-Volumenstromes anordenbarer Breather wiederum stromauf oder stromab des wiederum stromab des Leitungsbereiches angeordneten Zyklons positioniert werden kann.

Der Leitungsbereich ist bei einer kostengünstig herstellbaren Ausführungsform der erfindungsgemäßen Vorrichtung zumindest in seinem Zwischenbereich wenigstens annähernd rohrförmig bzw. hohlzylindrisch ausgebildet.

Der Diffusorbereich und/oder der Konfusorbereich können symmetrisch oder auch asymmetrisch ausgebildet sein, wobei die asymmetrische Ausführung des Diffusorbereiches und/des Konfusorbereiches bevorzugt bei einer wenigstens annähernd horizontalen Einbaulage des Leitungsbereiches vorgesehen wird, um über der Höhe des Strömungsquerschnittes im Leitungsbereich eine strömungsbedingt sich einstellende Tröpfchengrößenverteilung zu erzielen, die wiederum eine Abscheideleistung der Vorrichtung verbessert. Dieser Ausführung liegt die Kenntnis zugrunde, dass bei einer wenigstens annähernd horizontalen Einbaulage des Leitungsbereiches Tröpfchen mit geringerem Durchmesser von der Strömung aufgrund ihres geringeren Gewichts von der Strömung in einen oberen Bereich des Strömungsquerschnittes geführt werden, während größere Tröpfchen vermehrt im unteren Strömungsquerschnitt des Leitungsbereiches in Hauptströmungsrichtung des Luft-Öl-Volumenstromes durch den Leitungsbereich strömen und sich im unteren Wandungsbereich des Leitungsbereiches abscheiden, wenn diese mit dem Wandungsbereich in Berührung kommen. Die kleineren Tröpfchen des Luft-Öl-Volumenstromes vereinigen sich mit dem über den Auslassbereich der Einrichtung in den Leitungsbereich eingeleiteten Öl zu größeren Öltröpfchen, die dann stromab des Auslassbereiches der Einrichtung wiederum einfach aus dem Luft-Öl-Volumenstrom abscheidbar sind.

Der Auslassbereich kann beispielsweise als Nebeldüse ausgeführt sein, um einen kegelförmigen Ölsprühnebel in den Leitungsbereich einleiten zu können. Der Ölsprühnebel besteht aus Tröpfchen, deren definierte Durchmesser eine Koaleszenz mit Öltröpfchen im Luft-Öl-Volumenstrom begünstigen.

Grundsätzlich entspricht die Öl-Beladung des Luft-Öl-Volumenstromes unabhängig von der Einbaulage der Vorrichtung vor Einleiten des Ölstroms in den Leitungsbereich einem ersten Niveau, das vorzugsweise in etwa der Beladung des Luft-Öl-Volumenstromes mit Öl bei Verlassen eines mit Öl beaufschlagten Bereiches eines Flugtriebwerkes, wie einer Lagerkammer, eines Öltanks oder eines Innenraums eines Nebenaggregategetriebegehäuses, entspricht. Nach dem Einleiten des Öls über den Auslassbereich der Einrichtung im Leitungsbereich ist die Ölbeladung des Luft-Öl-Volumenstromes auf einem zweiten Niveau, das höher als das erste Niveau ist. Am Ende des Konfusorbereiches weist der Luft-Öl-Volumenstrom eine Ölbeladung auf, die einem dritten Niveau entspricht und das kleiner ist als das erste Beladungsniveau. Während der Durchströmung des dem Konfusorbereich optional folgenden Umlenkbereiches des Leitungsbereiches sinkt die Ölbeladung vom dritten Niveau auf ein viertes Niveau ab, das kleiner als das dritte Niveau ist.

Das erste Niveau der Ölbeladung des Luft-Öl-Volumenstromes ist vor Einleiten des Luft-Öl-Volumenstromes in den Leitungsbereich durch einen dem Leitungsbereich vorgeschalteten Zyklon reduzierbar. Zusätzlich oder alternativ hierzu ist das vierte Niveau der Ölbeladung des Luft-Öl-Volumenstromes durch einen dem Umlenkbereich nachgeschalteten Zyklon weiter absenkbar, wobei der Zyklon bei einer Ausführung des Leitungsbereiches ohne den Umlenkbereich auch direkt dem Konfusorbereich nachgeschaltet vorgesehen sein kann, wobei dann über den Zyklon das dritte Niveau der Ölbeladung absenkbar ist.

Darüber hinaus ist das dritte oder vierte Niveau der Ölbeladung des Luft-Öl-Volumenstromes durch einen dem Konfusorbereich oder dem Umlenkbereich nachgeschalteten Zyklon und einen wiederum dem Zyklon nachgeschalteten Breather auf ein gewünschtes Maß einstellbar.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Flugtriebwerkes mit einer im Bläsegehäuse angeordneten Nebenaggregategetriebeeinrichtung;
- Fig. 1b: eine Fig. 1a entsprechende Darstellung eines Flugtriebwerkes mit im Bereich des Triebwerkskerns montierter Nebenaggregategetriebeeinrichtung;
- Fig. 2: eine stark schematisierte Teildarstellung des Flugtriebwerkes gemäß Fig. 1a bzw. Fig. 1b mit im Bereich der Nebenaggregategetriebeeinrichtung angeordnetem Ölabscheider;
- Fig. 3: eine vergrößerte Darstellung eines in Fig. 2 näher gekennzeichneten Bereiches III;
- Fig. 4: den in Fig. 3 gezeigten Bereich aus einer in Fig. 3 näher gekennzeichneten Ansicht IV;
- Fig. 5: eine Fig. 3 entsprechende Darstellung einer zweiten Ausführungsform der erfindungsgemäßen Vorrichtung;
- Fig. 6: eine Fig. 3 entsprechende Darstellung einer dritten Ausführungsform der erfindungsgemäßen Vorrichtung;
- Fig. 7: eine Fig. 3 entsprechende Darstellung einer vierten Ausführungsform der erfindungsgemäßen Vorrichtung;
- Fig. 8: eine schematisierte Draufsicht auf einen Zyklon, der vorliegend einem Leitungsbereich der Vorrichtung gemäß Fig. 3 nachgeschaltet ist; und
- Fig. 9: eine Schnittansicht des in Fig. 8 gezeigten Zyklons entlang einer in Fig. 8 näher gekennzeichneten Schnittlinie IX-IX.

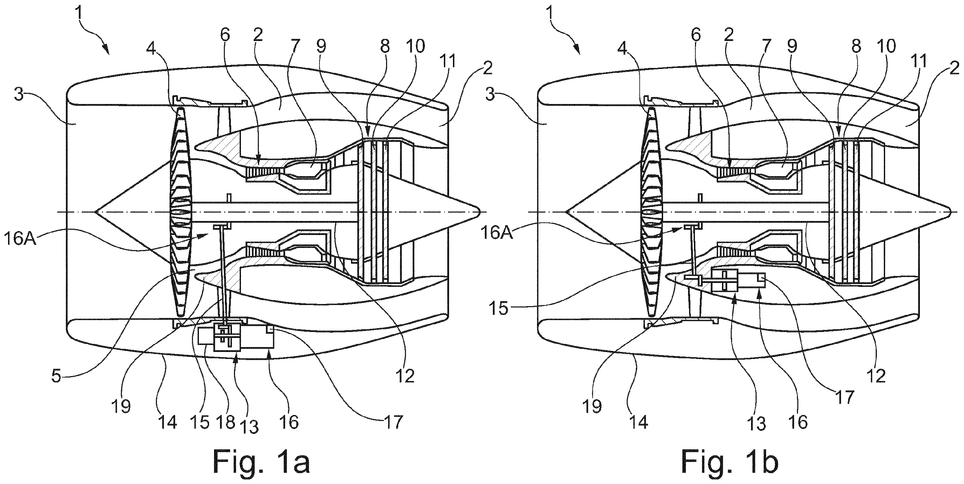

In Fig. 1a und 1b ist jeweils ein Flugtriebwerk bzw. Strahltriebwerk 1 in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerksachse 12 verbunden sind.

Bei der Ausführung des Flugtriebwerks 1 gemäß Fig. 1a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Flugtriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Flugtriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Flugtriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

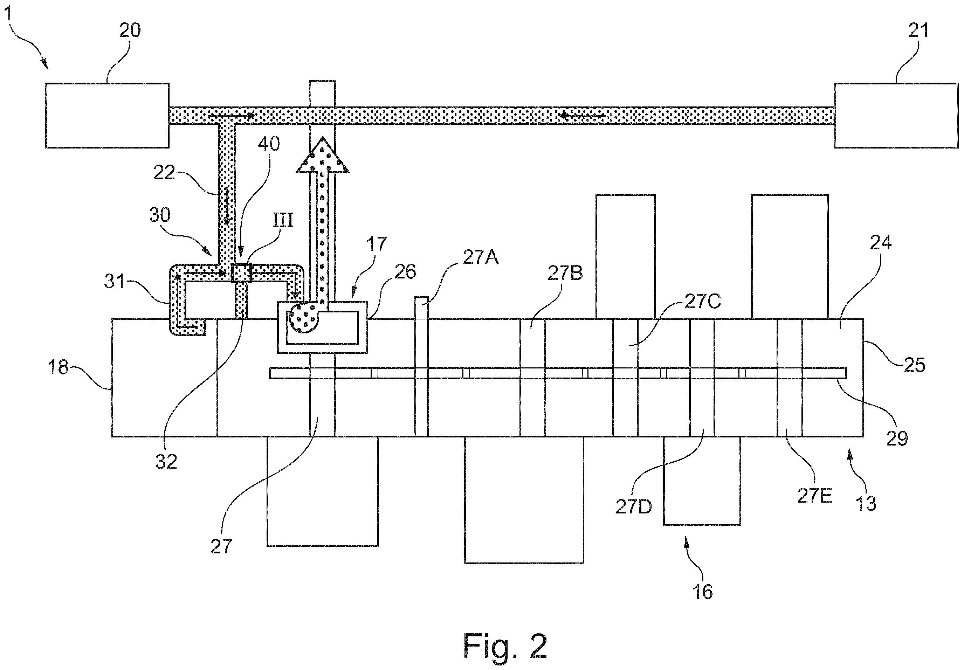

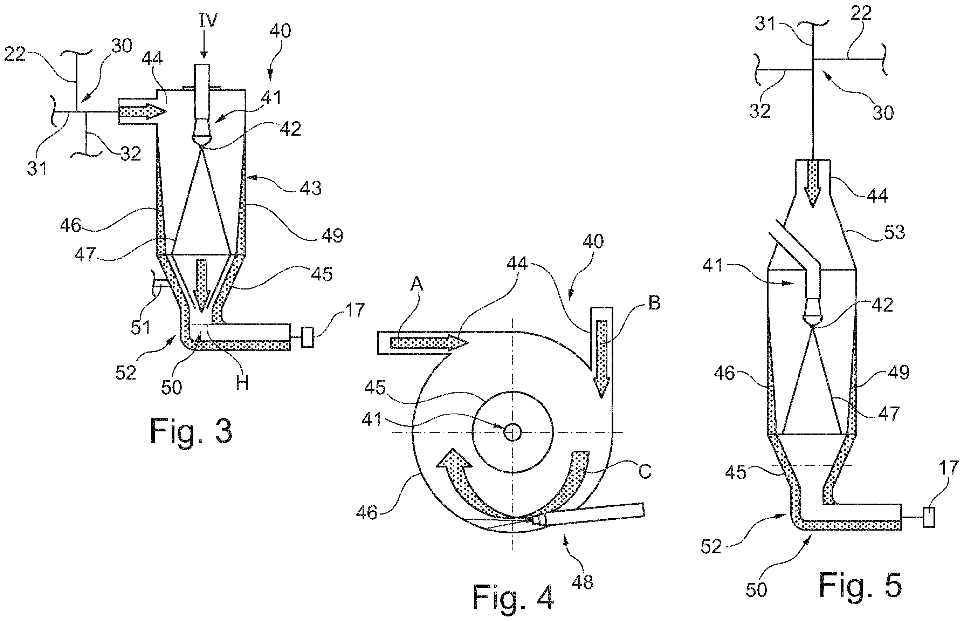

Fig. 2 zeigt eine Ausführungsform des Flugtriebwerks 1 gemäß Fig. 1a in stark schematisierter Form im Bereich der Nebenaggregategetriebeeinrichtung 13, der Nebenaggregate 16 und des Ölabscheiders 17, der vorliegend mit dem Öltank 18 und zwei weiteren Bereichen 20, 21 sowie einem Innenraum 24 eines Gehäuses 25 der Nebenaggregategetriebeeinrichtung 13 in Verbindung steht, die alle mit Öl beaufschlagte Bereiche des Flugtriebwerkes 1 darstellen. Die Bereiche 20, 21 stellen vorliegend Lagerkammern des Flugtriebwerkes 1 dar und werden im Betrieb des Flugtriebwerkes 1 mit Öl aus dem Öltank 18 zum Schmieren und Kühlen beaufschlagt. Dabei ist der Bereich 20 die Lagerkammer des vorderen Lagers und der Bereich 21 die Lagerkammer des hinteren Lagers des Flugtriebwerkes 1. Die nachfolgend zu Fig. 2 und zu Fig. 3 bis Fig. 9 näher beschriebenen Aspekte weist das Flugtriebwerk 1 gemäß Fig. 1b in im Wesentlich identischem Umfang auf.

Bei der in Fig. 2 gezeigten Ausführungsform des Flugtriebwerkes 1 sind jeweils ein Luft-Öl-Volumenstrom aus der vorderen Lagerkammer 20 und der hinteren Lagerkammer 21 in Richtung eines Leitungsbereiches 22 führbar. Die im Bereich der Lagerkammern 20 und 21 sowie im Bereich des Öltanks 18 und auch der Nebenaggregategetriebeeinrichtung 13 angereicherten Luft-Öl-Volumenströme werden stromab eines Leitungsbereichsknotens 30, in dessen Bereich der Leitungsbereich 22 und ein weiterer mit dem Öltank 18 verbundener Leitungsbereich 31 sowie ein mit der Nebenaggregategetriebeeinrichtung 13 gekoppelter Leitungsbereich 32 münden, in Richtung einer Vorrichtung 40 geführt, die in einem näher gekennzeichneten Bereich III vorgesehen ist.

Grundsätzlich besteht auch die Möglichkeit, lediglich einen Luft-Öl-Volumenstrom der Lagerkammern 20 und 21, des Öltanks 18 oder der Nebenaggregategetriebeeinrichtung 13 in Richtung der Vorrichtung 40 zu führen und dort in der nachfolgend näher beschriebenen Art und Weise zu reinigen.

Fig. 3 zeigt ein erstes Ausführungsbeispiel der Vorrichtung 40 des Flugtriebwerkes 1, die zum Abscheiden von Öl aus den Luft-Öl-Volumenströmen stromab des Leitungsbereichsknotens 30 vorgesehen ist. Die Vorrichtung 40 umfasst eine Einrichtung 41 zum Einleiten von Öl in den Luft-Öl-Volumenstrom stromab des Leitungsbereichsknotens 30. Ein Auslassbereich 42 der Einrichtung 41 zum Einleiten von Öl ist in einem geschlossenen Leitungsbereich 43 vorgesehen, in den der Luft-Öl-Volumenstrom über einen Einlassbereich 44 einleitbar ist. Ein Strömungsquerschnitt des Leitungsbereiches 43 verjüngt sich stromab des Auslassbereiches 42 der Einrichtung 41 in einem Konfusorbereich 45 des geschlossenen Leitungsbereiches 43 düsenartig, womit der im geschlossenen Leitungsbereich geführte Luft-Öl-Volumenstrom im Konfusorbereich 45 beschleunigt wird. Ein Strömungsquerschnitt eines stromauf des Konfusorbereiches 45 vorgesehenen Zwischenbereiches 46 des geschlossenen Leitungsbereiches 43, der sich zumindest zwischen dem Auslassbereich 42 der Einrichtung 41 und dem Konfusorbereich 45 erstreckt, ist zur Verhinderung einer positiven Beschleunigung des Luft-Öl-Volumenstromes wenigstens annähernd konstant ausgebildet und kann sich bei weiteren Ausführungen der Vorrichtung 1 auch zumindest abschnittsweise wenigstens annähernd diffusorartig erweitern.

Der Luft-Öl-Volumenstrom wird über den Einlassbereich 44 und der in Fig. 4 durch die Pfeile A, B und C angedeuteten Art und Weise tangential zum Wandungsbereich des geschlossenen Leitungsbereiches 43 bzw. des Zwischenbereiches 46 und im Wesentlichen senkrecht zur Einleitrichtung des Öls in den geschlossenen Leitungsbereich 43 eingeleitet, womit der Luft-Öl-Volumenstrom ausgehend vom Einlassbereich 44 zunächst schraubenförmig im Zwischenbereich 46 in Richtung des Konfusorbereiches 45 durch den Zwischenbereich 46 strömt.

Das Öl wird über den Auslassbereich 42 der Einrichtung 41 wenigstens annähernd mittig in den geschlossenen Leitungsbereich 43 bzw. dessen Zwischenbereich 46 in Form eines Sprühkegels 47 oder als kegelförmiger Ölfilm in den geschlossenen Leitungsbereich 43 eingeleitet. Der Öffnungswinkel des Sprühkegels 47 oder des kegelförmigen Ölfilms ist über den Auslassbereich 42 so einstellbar, dass das kegelförmig eingeleitete Öl in einem dem Auslassbereich 42 der Einrichtung 41 zugewandten Wandbereich des Konfusorbereiches 45 auftrifft. Der Strömungsquerschnitt des Einlassbereiches 44, über den der Luft-Öl-Volumenstrom stromauf des Auslassbereiches 42 der Einrichtung 41 in den Leitungsbereich 43 einleitbar ist, ist kleiner als der Strömungsquerschnitt des geschlossenen Leitungsbereiches 43 stromauf des Auslassbereiches 42 der Einrichtung 41.

Zusätzlich ist bei dieser Ausführung der Vorrichtung 40 in einem wandnahen Bereich des Leitungsbereiches 43 stromauf des Auslassbereiches 42 der Einrichtung 41 eine weitere optionale Öleinleitung 48 vorgesehen, um im Wandungsbereich des Leitungsbereiches 43 einen Ölfilm 49 und eine Strömung im Ölfilm ausgehend vom Einlassbereich 44 in Richtung eines Ölauslasses 50 des geschlossenen Leitungsbereiches 43 zu erzeugen, in dessen Bereich vom Luft-Öl-Volumenstrom mitgeführte Öltröpfchen sich mit hohem Wirkungsgrad abscheiden und eine Abscheideleistung der Vorrichtung 40 verbessert ist.

Zusätzlich wird über den Ölauslass 50 auch über den Einlassbereich 44 in den geschlossenen Leitungsbereich 43 einströmende Luft aus dem geschlossenen Leitungsbereich 43 ausgeleitet, womit der Ölauslass 50 einen kombinierten Luft-Öl-Auslass darstellt.

Alternativ hierzu besteht auch die Möglichkeit, dass über den Ölauslass 50 lediglich Öl aus dem geschlossenen Leitungsbereich 43 ausgeleitet wird, während die Luft über einen separaten Luftauslass 51 aus dem geschlossenen Leitungsbereich 43 ausführbar ist, wobei dann ein Ölstand H im Bereich des Ölauslasses 50 das in Fig. 3 angedeutete Niveau aufweist.

Stromab des Konfusorbereiches 45 umfasst der geschlossene Leitungsbereich 43 einen Umlenkbereich 52, der vorliegend eine Biegung um 90° aufweist und in dessen Bereich der Luft- und Ölauslass 50 bzw. 51 vorgesehen ist. Bei weiteren Ausführungsformen kann die Umlenkung auch mit einer Biegung größer oder kleiner als 90° ausgeführt sein. Der Umlenkbereich 52 wirkt wie ein Prallfilter und im Luft-Öl-Volumenstrom mitgeführtes Öl wird dort mechanisch abgeschieden, womit eine Abscheideleistung der Vorrichtung 40 wiederum weiter verbessert wird.

Die durch die Auswaschung des Öls nunmehr vergrößerten Ölpartikel bzw. Öltröpfchen im Luft-Öl-Volumenstrom stromab des Auslassbereiches 42 der Einrichtung 41 sind durch das Einleiten von Öl im Konfusorbereich 45 und im Umlenkbereich 52 wesentlich effizienter separierbar, womit Ölverluste des Flugtriebwerkes 1 durch verringerte Emission in Richtung einer Umgebung 28 des Strahltriebwerks 1 minimiert sind.

Fig. 5 zeigt eine Fig. 3 entsprechende Darstellung einer zweiten Ausführungsform der Vorrichtung 40, bei der der Luft-Öl-Volumenstrom stromab des Leitungsbereichsknotens 30 im Wesentlichen in axialer Richtung des geschlossenen Leitungsbereiches 43 eingeleitet wird. Im Unterschied zu der Ausführung der Vorrichtung 40 gemäß Fig. 3 umfasst die Vorrichtung 40 gemäß Fig. 5 stromauf des Auslassbereiches 42 der Einrichtung 41 und des Zwischenbereiches 46 einen Diffusorbereich 53, in dessen Bereich der Strömungsquerschnitt des geschlossenen Leitungsbereiches 43 diffusorartig erweiternd ausgebildet ist, um eine Strömungsgeschwindigkeit des Luft-Öl-Volumenstromes zu reduzieren und im Zwischenbereich 46 eine möglichst beruhigte Strömung, vorzugsweise eine laminare Strömung, zu erzeugen, die das Zusammengehen bzw. Koaleszieren kleiner Tröpfchen des Luft-Öl-Volumenstromes mit dem über die Einrichtung 41 eingeleiteten Öl im Zwischenbereich 46 begünstigt. Das Koaleszieren der Öltröpfchen des Luft-Öl-Volumenstromes und des eingeleiteten Öls wird durch die jeweils vorliegenden Anziehungskräfte zwischen den einzelnen Öltröpfchen begünstigt, wobei sich das Bestreben der Öltröpfchen, sich zu größeren Öltröpfchen zu vereinen, mit steigendem Verhältnis zwischen den Durchmessern der Öltröpfchen vergrößert.

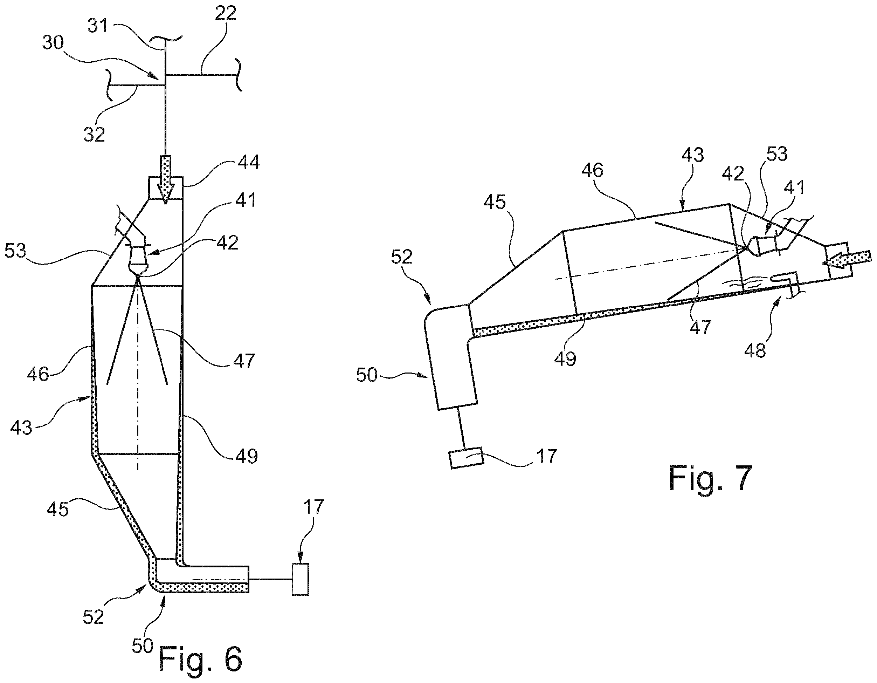

In Fig. 6 ist eine dritte Ausführung der Vorrichtung 40 gezeigt, die bis auf eine asymmetrische Ausführung des Diffusorbereiches 53 und des Konfusorbereiches 45 im Wesentlichen der Ausführung der Vorrichtung 40 gemäß Fig. 5 entspricht. Bei der Ausführung der Vorrichtung 40 gemäß Fig. 6 sind sowohl der Einlassbereich 44 des geschlossenen Leitungsbereiches 43 und auch der Auslassbereich 50 im Umlenkbereich 53 nicht konzentrisch bezüglich des Auslassbereiches 42 der Einrichtung 41 angeordnet, wobei das Öl über den Auslassbereich 42 der Einrichtung 41 zentrisch in den Zwischenbereich 46 in Form des Sprühkegels 47 bzw. des kegelförmigen Ölfilms eingeleitet wird. Im Wandungsbereich des geschlossenen Leitungsbereiches 43 bildet sich wiederum ein die Abscheideleistung der Vorrichtung 40 verbessernder Ölfilm 49, der in Richtung des Ölauslasses 50 fließt.

Die Vorrichtung 40 ist sowohl in der in Fig. 6 gezeigten Art und Weise vertikal als auch in dem in Fig. 7 dargestellten Umfang wenigstens annähernd horizontal montierbar, um Öl aus dem Luft-Öl-Volumenstrom abzuscheiden, wobei bei der Ausführungsform der Vorrichtung 40 gemäß Fig. 7 die weitere Öleinleitung 48 im unteren Wandbereich des geschlossenen Leitungsbereiches 43 vorgesehen ist, um dort den Ölfilm 49 zur Steigerung der Abscheideleistung der Vorrichtung 40 und eine in Richtung des Ölauslasses 50 gerichtete Strömung im Ölfilm 49 zu erzeugen.

Bei der im Wesentlichen horizontalen Ausrichtung der Vorrichtung 40 bildet sich über dem Strömungsquerschnitt des Zwischenbereiches 46 des geschlossenen Leitungsbereiches 43 eine definierte Öltropfendurchmesserverteilung aus, die durch die an den im Luft-Öl-Volumenstrom mitgeführten Öltröpfchen angreifende Schwerkraft begünstigt ist. Die an den Öltröpfchen angreifende Schwerkraft führt dazu, dass sich im unteren Bereich des Strömungsbereiches vermehrt größere Öltröpfchen ansammeln, während im oberen Bereich des Strömungsbereiches vom Luft-Öl-Volumenstrom Öltröpfchen mit geringerem Tropfendurchmesser in Richtung des Konfusorbereiches 45 mitgeführt werden. Mit zunehmendem Strömungsweg des Luft-Öl-Volumenstromes im Zwischenbereich 46 scheiden sich im unteren Wandungsbereich des geschlossenen Leitungsbereiches 43 die größeren Öltröpfchen im Bereich des Ölfilms 49 ab, während die kleineren Öltröpfchen im oberen Strömungsquerschnitt des Zwischenbereiches 46 mit dem über die Einrichtung 41 eingeleiteten Öl sich zu größeren Öltröpfchen vereinigen, die spätestens im Konfusorbereich 45 und in dem sich an den Konfusorbereich 45 anschließenden Umlenkbereich 52 zu einem wesentlichen Teil mechanisch abgeschieden werden.

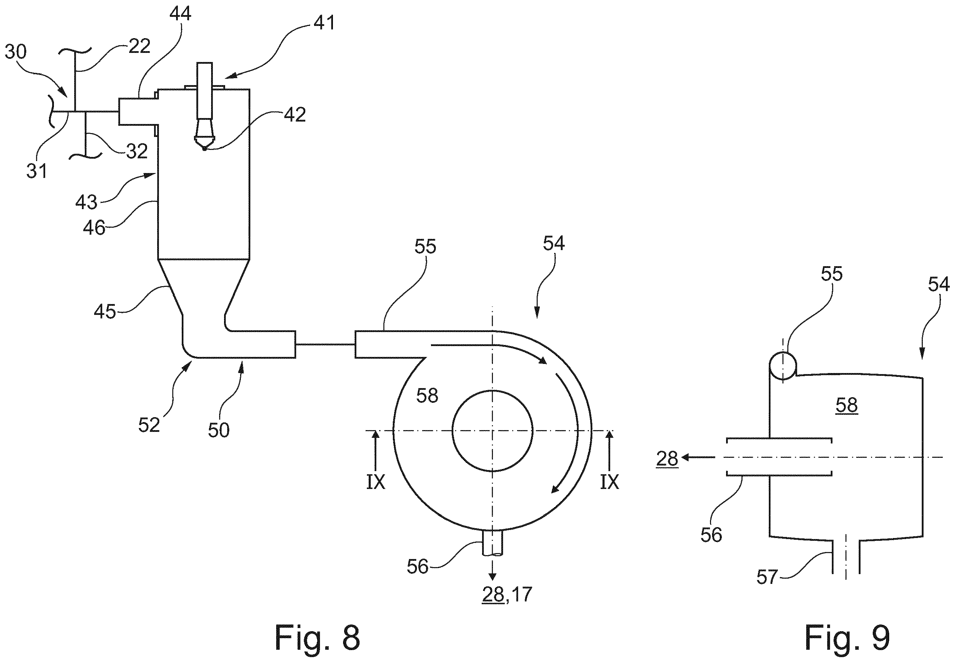

Um die aus dem geschlossenen Leitungsbereich 43 ausströmende Luft, die nach wie vor eine definierte Beladung aufweist, die jedoch geringer ist als die Beladung des Luft-Öl-Volumenstromes, und die über den Einlassbereich 44 in den geschlossenen Leitungsbereich 43 eingeleitet wird, weiter reinigen zu können, ist es bei einer weiteren in Fig. 8 und Fig. 9 gezeigten Ausführungsform der Vorrichtung 40 vorgesehen, dass der aus dem weiteren Leitungsbereich 43 ausgeleitete Luft-Öl-Volumenstrom über einen Lufteinlass 55 in einen Zyklon 54 tangential zu einem Wandungsbereich des Zyklons 54 eingeleitet wird. Alternativ hierzu kann es auch vorgesehen sein, dass der Zyklon 54 stromauf des Einlassbereiches 44 des geschlossenen Leitungsbereiches 43 angeordnet ist und eine Beladung des Luft-Öl-Volumenstromes stromab des Leitungsbereichsknotens 30 zunächst im Bereich des Zyklons 54 reduziert wird und anschließend der vorgereinigte Luft-Öl-Volumenstrom über einen Luftauslass 56 des Zyklons 54 in Richtung des Einlassbereiches 44 des geschlossenen Leitungsbereiches 43 geführt wird.

Der Zyklon 54 weist einen separaten Luft- und Ölauslass auf, wobei ein Ölauslass 57 des Zyklons 54 sich in Einbaulage des Zyklons 54 in einem unteren Bereich des Zyklons 54 vorgesehen ist, während Luft über den Luftauslass 56 aus einem mittigen Bereich eines Innenraumes 58 des Zyklons 54 aus diesem ableitbar ist.

Der Luftauslass 56 des Zyklons 54 ist wie der kombinierte Luft-Öl-Auslass 50 oder der separate Luftauslass 51 der Vorrichtung 40 gemäß Fig. 3 bis Fig. 7 mit dem Ölabscheider 17 gekoppelt, womit ein aus dem Zyklon 54 über den Luftauslass 56 ausgeleiteter und mit Öl beladener Luft-Öl-Volumenstrom in den Ölabscheider 17 eingeleitet wird. Das jeweils im Bereich der Vorrichtungen 40 gemäß Fig. 3 bis Fig. 9 aus dem Luft-Öl-Volumenstrom abgetrennte Öl wird in Abhängigkeit des jeweils vorliegenden Anwendungsfalles entweder sofort in einen Ölkreislauf des Flugtriebwerkes 1 rückgeführt oder zunächst in Richtung des Ölabscheiders 17 weitergeleitet und dort in den Ölkreislauf rückgeführt.

Im Innenraum des Ölabscheiders 17 ist ein poröser Bereich 26 drehbar angeordnet, der von dem aus dem Zyklon 54 ausströmenden Luft-Öl-Volumenstrom durchströmbar ist. Der poröse Bereich 26 ist in dem in Fig. 2 gezeigten Umfang vorliegend über ein Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstromes so weit als möglich reduzieren zu können. Dabei wird der Ölanteil des Luft-Öl-Volumenstromes im Ölabscheider 17 im Bereich des porösen Bereiches 26 einerseits wie beim Durchströmen eines Prallfilters und andererseits wie im Bereich einer Zentrifuge durch die Rotation des porösen Bereiches 26 durch Abscheiden des Öls aus der Luft reduziert. Das im Bereich des porösen Bereiches 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in den Öltank 18 geführt. Der aus dem Ölabscheider 17 in Richtung der Umgebung 28 ausströmende Luftstrom weist nur eine geringe Beladung an Öl auf. Das Zahnrad 27 ist neben weiteren Zahnrädern 27A bis 27E drehfest mit einer Getriebewelle 29 verbunden und im Innenraum 24 der Nebenaggregategetriebeeinrichtung 13 angeordnet.

### Bezugszeichenliste

- 1: Flugtriebwerk, Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 17: Ölabscheider
- 18: Öltank
- 20: Bereich, vordere Lagerkammer
- 21: Bereich, hintere Lagerkammer
- 22: Leitungsbereich
- 24: Innenraum
- 25: Gehäuse
- 26: poröser Bereich
- 27: Zahnrad
- 27A bis 27E: Zahnrad
- 28: Umgebung
- 29: Getriebewelle
- 30: Leitungsbereichsknoten
- 31: Leitungsbereich
- 32: Leitungsbereich
- 40: Vorrichtung
- 41: Einrichtung
- 42: Auslassbereich der Einrichtung
- 43: geschlossener Leitungsbereich
- 44: Einlassbereich des geschlossenen Leitungsbereiches
- 45: Konfusorbereich
- 46: Zwischenbereich
- 47: Sprühkegel
- 48: weitere Öleinleitung
- 49: Ölfilm
- 50: Ölauslass, kombinierter Luft-Öl-Auslass
- 51: Luftauslass
- 52: Umlenkbereich
- 53: Diffusorbereich
- 54: Zyklon
- 55: Lufteinlass
- 56: Luftauslass
- 57: Ölauslass
- 58: Innenraum des Zyklons
- A bis C: Pfeil
- H: Ölstand

## Patentansprüche

1. Vorrichtung (40) für ein Flugtriebwerk (1) zum Abscheiden von Öl aus einem Luft-Öl-Volumenstrom mit einer Einrichtung (41) zum Einleiten von Öl in den Luft-Öl-Volumenstrom, wobei ein Auslassbereich (42) der Einrichtung (41) zum Einleiten von Öl in einem geschlossenen Leitungsbereich (43) vorgesehen ist, in den der Luft-Öl-Volumenstrom über einen Einlassbereich (44) einleitbar ist, **dadurch gekennzeichnet, dass** sich ein Strömungsquerschnitt des Leitungsbereiches (43) stromab des Auslassbereiches (42) der Einrichtung (41) in einem Konfusorbereich (45) zumindest abschnittsweise wenigstens teilweise düsenartig verjüngt, wobei der Leitungsbereich (43) stromauf des Auslassbereiches (42) der Einrichtung (41) einen Diffusorbereich (53) aufweist, in dessen Bereich der Strömungsquerschnitt des Leitungsbereiches (43) zumindest abschnittsweise wenigstens annähernd diffusorartig erweiternd ausgebildet ist.

2. Vorrichtung nach Anspruch 1, **dadurch gekennzeichnet, dass** ein Strömungsquerschnitt eines Zwischenbereiches (46) des geschlossenen Leitungsbereiches (43), der sich zumindest zwischen dem Auslassbereich (42) der Einrichtung (41) und dem Konfusorbereich (45) erstreckt, zur Verhinderung einer positiven Beschleunigung des Luft-Öl-Volumenstromes wenigstens annähernd konstant und/oder sich zumindest abschnittsweise wenigstens annähernd diffusorartig erweiternd ausgebildet ist.

3. Vorrichtung nach einem der Ansprüche 1 oder 2, **dadurch gekennzeichnet, dass** sich an den Konfusorbereich (45) ein Umlenkbereich (52) des Leitungsbereiches (43) anschließt, der eine Biegung vorzugsweise um 90° aufweist, wobei der Umlenkbereich (53) mit einem separaten Ölauslass (50) oder mit einem kombinierten Luft-Öl-Auslass des Leitungsbereiches (43) ausgeführt ist.

4. Vorrichtung nach einem der Ansprüche 1 bis 3, **dadurch gekennzeichnet, dass** der Leitungsbereich (43) mit einem Zyklon (54) verbunden ist, in dessen Bereich Öl aus einem Luft-Öl-Volumenstrom, der in den Leitungsbereich (43) einzuleiten ist oder aus diesem ausgeführt wird, mechanisch abscheidbar ist.

5. Vorrichtung nach einem der Ansprüche 1 bis 4, **dadurch gekennzeichnet, dass** stromab des Leitungsbereiches (43) ein Ölabscheider (17) vorgesehen ist.

6. Vorrichtung nach Anspruch 5, **dadurch gekennzeichnet, dass** ein Lufteinlass (55) des Zyklons (54) für den Luft-Öl-Volumenstrom mit einem Luft-Auslass (50) des Leitungsbereiches (43) oder mit einem Luft-Auslass (22, 31, 32) eines mit Öl beaufschlagten Bereiches (20, 21, 18, 13) verbunden ist, wobei ein Luft-Auslass (56) des Zyklons (54) mit dem Einlassbereich (44) des Leitungsbereiches (43), dem Luft-Einlass des Ölabscheiders (17) oder mit einer Umgebung (28) des Strahltriebwerks (1) verbindbar ist.

7. Vorrichtung nach einem der Ansprüche 4 bis 6, **dadurch gekennzeichnet, dass** der Zyklon (54) einen separaten Luft- und Ölauslass aufweist, wobei der Öl-Auslass (57) des Zyklons (54) in Einbaulage des Zyklons (54) in einem unterem Bereich des Zyklons (54) vorgesehen ist, während Luft über den Luft-Auslass (56) aus einem mittigen Bereich eines Innenraumes (58) des Zyklons (54) aus diesem ableitbar ist.

8. Vorrichtung nach Anspruch 6 oder 7, **dadurch gekennzeichnet, dass** ein Luft-Öl-Volumenstrom über den Luft-Einlass (55) tangential zu einem Wandungsbereich des Zyklons (54) in den Zyklon (54) einleitbar ist.

9. Vorrichtung nach einem der Ansprüche 1 bis 8, **dadurch gekennzeichnet, dass** das Öl über den Auslassbereich (42) der Einrichtung (41) wenigstens annähernd mittig in den Leitungsbereich (43) einleitbar ist.

10. Vorrichtung nach einem der Ansprüche 1 bis 9, **dadurch gekennzeichnet, dass** das Öl über den Auslassbereich (42) der Einrichtung (41) in Form eines Sprühkegels (47) oder als kegelfömiger Ölfilm in den Leitungsbereich einleitbar ist.

11. Vorrichtung nach Anspruch 10, **dadurch gekennzeichnet, dass** der Öffnungswinkel des Sprühkegels (47) oder des kegelförmigen Ölfilms über den Auslassbereich (42) der Einrichtung (41) so einstellbar ist, dass das kegelförmig eingeleitete Öl in einem dem Auslassbereich (42) der Einrichtung (41) zugewandten Wandbereich des Konfusorbereiches (45) auftrifft.

12. Vorrichtung nach einem der Ansprüche 1 bis 11, **dadurch gekennzeichnet, dass** der Luft-Öl-Volumenstrom über den Einlassbereich (44) stromauf des Auslassbereiches (42) der Einrichtung (41) in den Leitungsbereich (43) einleitbar ist, dessen Strömungsquerschnitt kleiner ist als der Strömungsquerschnitt des Leitungsbereiches (43) stromauf des Auslassbereiches (42) der Einrichtung (41).

13. Vorrichtung nach einem der Ansprüche 1 bis 12, **dadurch gekennzeichnet, dass** der Luft-Öl-Volumenstrom über den Einlassbereich (44) tangential zum Wandungsbereich des Leitungsbereiches (43) und im Wesentlichen senkrecht zur Einleitrichtung des Öls in den Leitungsbereich (43) einleitbar ist.

14. Vorrichtung nach einem der Ansprüche 1 bis 13, **dadurch gekennzeichnet, dass** eine weitere Öleinleitung (48) in einem wandnahen Bereich des Leitungsbereiches (43) und vorzugsweise stromauf des Auslassbereiches (42) vorgesehen ist, um im Wandbereich des Leitungsbereiches (43) einen Ölfilm und eine Strömung im Ölfilm in Richtung des Ölauslasses (50) des Leitungsbereiches (43) zu erzeugen.

## Claims

1. Device (40) for an aircraft engine (1) for separating oil from an air-oil volume flow with an apparatus (41) for introducing oil into the air-oil volume flow, wherein an outlet area (42) of the apparatus (41) for introducing oil is provided in a closed line section (43), into which the air-oil volume flow can be introduced via an inlet area (44), **characterized in that** a flow cross-section of the line section (43) downstream of the outlet area (42) of the apparatus (41) tapers at least partially like a nozzle and at least in some sections inside a confusor area (45), wherein the line section (43) upstream of the outlet area (42) of the apparatus (41) has a diffusor area (53), in which the flow cross-section of the line section (43) is designed widening at least approximately diffusor-like at least in some sections.

2. Device in accordance with Claim 1, **characterized in that** a flow cross-section of an intermediate area (46) of the closed line section (43), which extends at least between the outlet area (42) of the apparatus (41) and the confusor area (45), is designed at least approximately constant and/or widening at least approximately diffusor-like at least in some sections in order to prevent a positive acceleration of the air-oil volume flow.

3. Device in accordance with one of the Claims 1 or 2, **characterized in that** a deflection area (52) of the line section (43), which has a bend of preferably 90° adjoins the confusor area (45), with the deflection area (52) being designed with a separate oil outlet (50) or with a combined air-oil outlet of the line section (43).

4. Device in accordance with one of the Claims 1 to 3, **characterized in that** the line section (43) is connected to a cyclone (54), in the area of which oil from an air-oil volume flow to be introduced into or passed out of the line section (43) can be separated mechanically.

5. Device in accordance with one of the Claims 1 to 4, **characterized in that** an oil separator (17) is provided downstream of the line section (43).

6. Device in accordance with Claim 5, **characterized in that** an air inlet (55) of the cyclone (54) for the air-oil volume flow is connected to an air outlet (50) of the line section (43) or to an air outlet (22, 31, 32) of an area (20, 21, 18, 13) supplied with oil, wherein an air outlet (56) of the cyclone (54) can be connected to the inlet area (44) of the line section (43), to the air-inlet of the oil separator (17) or to an environment (28) of the jet engine (1).

7. Device in accordance with one of the Claims 4 to 6, **characterized in that** the cyclone (54) has separate air and oil outlets, wherein the oil outlet (57) of the cyclone (54) in the installation position of the cyclone (54) is provided in a lower area of the cyclone (54), while air can be removed via the air outlet (56) from a center area of an interior (58) of the cyclone (54) out of the latter.

8. Device in accordance with Claim 6 or 7, **characterized in that** an air-oil volume flow can be introduced into the cyclone (54) via the air inlet (55) and tangentially to a wall area of the cyclone (54).

9. Device in accordance with one of the Claims 1 to 8, **characterized in that** the oil can be introduced into the line section (43) via the outlet area (42) of the apparatus (41) at least approximately centrally.

10. Device in accordance with one of the Claims 1 to 9, **characterized in that** the oil can be introduced into the line section via the outlet area (42) of the apparatus (41) in the form of a spray cone (47) or as a cone-shaped oil film.

11. Device in accordance with Claim 10, **characterized in that** the opening angle of the spray cone (47) or of the cone-shaped oil film is settable using the outlet area (42) of the apparatus (41) in such a way that the oil introduced in conical form impacts in a wall area of the confusor area (45), said wall area facing the outlet area (42) of the apparatus (41).

12. Device in accordance with one of the Claims 1 to 11, **characterized in that** the air-oil volume flow can be introduced into the line section (43) via the inlet area (44) upstream of the outlet area (42) of the apparatus (41), the flow cross-section of said line section (43) being smaller than the flow cross-section of the line section (43) upstream of the outlet area (42) of the apparatus (41).

13. Device in accordance with one of the Claims 1 to 12, **characterized in that** the air-oil volume flow can be introduced into the line section (43) via the inlet area (44) tangentially to the wall area of the line section (43) and substantially perpendicular to the introduction direction of the oil.

14. Device in accordance with one of the Claims 1 to 13, **characterized in that** a further oil introduction (48) is provided in an area of the line section (43) close to the wall and preferably upstream of the outlet area (42), in order to generate in the wall area of the line section (43) an oil film and a flow in the oil film in the direction of the oil outlet (50) of the line section (43).

## Revendications

1. Dispositif (40) pour un moteur d'avion (1), destiné à séparer de l'huile d'un flux volumétrique d'air-huile avec un appareil (41) servant à introduire de l'huile dans le flux volumétrique d'air-huile, sachant qu'est prévue une zone de sortie (42) de l'appareil (41) destiné à introduire de l'huile dans une portion de conduite fermée (43) dans laquelle le flux volumétrique d'air-huile est introductible par le biais d'une zone d'entrée (44), **caractérisé en ce qu'**une section d'écoulement de la portion de conduite (43) en aval de la zone de sortie (42) de l'appareil (41) se rétrécie au moins partiellement comme une tuyère et au moins par sections dans une zone de convergent (45), sachant que la portion de conduite (43) en amont de la zone de sortie (42) de l'appareil (41) présente une zone de diffuseur (53) dans laquelle la section d'écoulement de la portion de conduite (43) est conçue en s'élargissant au moins approximativement comme un diffuseur au moins par sections.

2. Dispositif selon la revendication n° 1, **caractérisé en ce qu'**une section d'écoulement d'une zone intermédiaire (46) de la portion de conduite fermée (43), qui s'étend au moins entre la zone de sortie (42) de l'appareil (41) et la zone de convergent (45), est conçue au moins approximativement constante pour empêcher une accélération positive du flux volumétrique d'air-huile, et/ ou est conçue en s'élargissant au moins approximativement comme un diffuseur au moins par sections.

3. Dispositif selon une des revendications n° 1 ou n° 2, **caractérisé en ce qu'**une zone de déflexion (52) de la portion de conduite (43), qui présente de préférence une courbure de 90°, jouxte la zone de convergent (45), sachant que la zone de déflexion (52) est conçue avec une sortie d'huile (50) séparée ou avec une sortie d'air-huile combinée de la portion de conduite (43).

4. Dispositif selon une des revendications n° 1 à n° 3, **caractérisé en ce que** la portion de conduite (43) est reliée à un cyclone (54) dans la zone duquel de l'huile provenant d'un flux volumétrique d'air-huile qui doit être introduit dans la portion de conduite (43) ou évacué hors de celle-ci, est séparable mécaniquement.

5. Dispositif selon une des revendications n° 1 à n° 4, **caractérisé en ce qu'**un séparateur d'huile (17) est prévu en aval de la portion de conduite (43).

6. Dispositif selon la revendication n° 5, **caractérisé en ce qu'**une entrée d'air (55) du cyclone (54) pour le flux volumétrique d'air-huile est reliée à une sortie d'air (50) de la portion de conduite (43) ou à une sortie d'air (22, 31, 32) d'une zone alimentée en huile (20, 21, 18, 13), sachant qu'une sortie d'air (56) du cyclone (54) est reliable à la zone d'entrée (44) de la portion de conduite (43), à l'entrée d'air du séparateur d'huile (17) ou à un environnement (28) du réacteur (1).

7. Dispositif selon une des revendications n° 4 à n° 6, **caractérisé en ce que** le cyclone (54) présente des sorties d'air et d'huile séparées, sachant que la sortie d'huile (57) du cyclone (54) en position de montage du cyclone (54) est prévue dans une partie inférieure du cyclone (54) tandis que de l'air provenant d'une zone centrale d'un espace intérieur (58) du cyclone (54) est évacuable hors de celui-ci par le biais de la sortie d'air (56).

8. Dispositif selon la revendication n° 6 ou n° 7, **caractérisé en ce qu'**un flux volumétrique d'air-huile est introductible dans le cyclone (54) tangentiellement à une zone de paroi du cyclone (54) par le biais de l'entrée d'air (55).

9. Dispositif selon une des revendications n° 1 à n° 8, **caractérisé en ce que** l'huile est introductible dans la portion de conduite (43) par le biais de la zone de sortie (42) de l'appareil (41), au moins approximativement au centre.

10. Dispositif selon une des revendications n° 1 à n° 9, **caractérisé en ce que** l'huile est introductible dans la portion de conduite par le biais de la zone de sortie (42) de l'appareil (41), sous la forme d'un cône de pulvérisation (47) ou d'un film d'huile conique.

11. Dispositif selon la revendication n° 10, **caractérisé en ce que** l'angle d'ouverture du cône de pulvérisation (47) ou du film d'huile conique est réglable au moyen de la zone de sortie (42) de l'appareil (41) de telle manière que l'huile introduite en forme de cône frappe une zone de paroi de la zone de convergent (45), ladite zone de paroi faisant face à la zone de sortie (42) de l'appareil (41).

12. Dispositif selon une des revendications n° 1 à n° 11, **caractérisé en ce que** le flux volumétrique d'air-huile est introductible dans la portion de conduite (43) par le biais de la zone d'entrée (44) en amont de la zone de sortie (42) de l'appareil (41), la section d'écoulement de ladite portion de conduite (43) étant plus petite que la section d'écoulement de la portion de conduite (43) en amont de la zone de sortie (42) de l'appareil (41).

13. Dispositif selon une des revendications n° 1 à n° 12, **caractérisé en ce que** le flux volumétrique d'air-huile est introductible dans la portion de conduite (43) par le biais de la zone d'entrée (44) tangentiellement à la zone de paroi de la portion de conduite (43) et essentiellement perpendiculairement au sens d'introduction de l'huile.

14. Dispositif selon une des revendications n° 1 à n° 13, **caractérisé en ce qu'**une autre introduction d'huile (48) est prévue dans une zone proche de la paroi de la portion de conduite (43) et de préférence en amont de la zone de sortie (42) pour produire dans la zone de paroi de la portion de conduite (43) un film d'huile et un écoulement dans le film d'huile en direction de la sortie d'huile (50) de la portion de conduite (43).
